# EUROPÄISCHE PATENTSCHRIFT

(11) **EP 2 585 703 B1**
(45) Veröffentlichungstag und Bekanntmachung des Hinweises auf die Patenterteilung: **20.08.2014**
(21) Anmeldenummer: 11726800.3
(22) Anmeldetag: 22.06.2011
(51) Int. Cl.: F02M 25/07, B01D 39/12, B01D 53/94, B01D 46/00, B01D 46/10, F01N 3/022, F01N 3/035, F01N 3/28, F02B 37/00

(54) **VORRICHTUNG ZUR PARTIKELABSCHEIDUNG IM ABGASRÜCKFÜHRSYSTEM**
APPARATUS FOR PARTICLE DEPOSITION IN THE EXHAUST-GAS RECIRCULATION SYSTEM
DISPOSITIF DE SÉPARATION DE PARTICULES DANS UN SYSTÈME DE RECYCLAGE DES GAZ D'ÉCHAPPEMENT

(30) Priorität: 03.11.2010 DE 102010050393; 28.06.2010 DE 102010025284
(43) Veröffentlichungstag der Anmeldung: 01.05.2013
(73) Patentinhaber: Emitec Gesellschaft für Emissionstechnologie mbH, 53797 Lohmar (DE)
(72) Erfinder: KRUSE, Carsten, 53842 Troisdorf (DE); NAGEL, Thomas, 51766 Engelskirchen (DE); KURTH, Ferdi, 53894 Mechernich (DE)
(74) Vertreter: Rössler, Matthias
(86) Internationale Anmeldenummer: PCT/EP2011/060399
(87) Internationale Veröffentlichungsnummer: WO 2012/000852

(56) Entgegenhaltungen:
- DE-A1-102008 038 983
- US-A- 4 301 010
- US-A1- 2005 109 017
- US-A1- 2007 104 622
- US-A1- 2007 151 231

## Beschreibung

Die vorliegende Erfindung betrifft eine Vorrichtung zum Abfangen bzw. Auffangen von Partikeln, welche durch eine Abgasrückführleitung geführt werden. Eine Abgasrückführleitung dient dazu, das im Verbrennungsraum einer Verbrennungskraftmaschine erzeugte Abgas der Verbrennungskraftmaschine bedarfsgerecht wieder zuzuführen. Solche Systeme für eine Abgasrückführung wurden bereits vielfach beschrieben, insbesondere im Zusammenhang mit einem Turbolader. Ebenso ist bekannt, bereits im Abgassystem, unmittelbar folgend der Verbrennungskraftmaschine, Katalysatorträgerkörper und/oder Filter, insbesondere auch in keramischer Bauweise, vorzusehen, um die dort existierenden hohen Temperaturen zur katalytischen Umsetzung von Bestandteilen des Abgases auszunutzen.

Eine Anordnung mit einem geschützten Turbolader in der Abgasrückführleitung geht aus der WO 2007/110170 A1 hervor. Dort wird vorgeschlagen, in einem Bereich der Abgasrückführleitung eine Sieblage vorzusehen, die größer als mittlerer Querschnitt der Abgasrückführleitung ist. In Folge der vergrößerten Siebfläche kann das Abgas die Sieblage mit einem deutlich kleineren Druckverlust durchströmen, wobei eine wirkungsvolle Schutzmaßnahme getroffen ist, die gleichwohl das Anströmverhalten des Abgases hin zum Turbolader nur unwesentlich beeinträchtigt.

Aus der DE-A1-10 2008 038 983 ist eine Partikelabfangvorrichtung bekannt, die zwischen einer Abgasleitung und einer Abgasrückführleitung angeordnet ist und die einen teilweise durchlässigen Hohlkörper aufweist, der die Abgasrückführleitung von der Abgasleitung abgrenzt. Diese Partikelabfangvorrichtung ist für die Anordnung in der Abgasleitung an einer Abzweigstelle der Abgasrückführleitung vorgesehen.

Bei der Integration eines solchen Siebes bzw. Filters in die Abgasrückführleitung ist zu berücksichtigen, dass dort unter Umständen eine hohe Druckbelastung auftreten kann, die bspw. die Deformierung des Siebes bzw. des Filters zur Folge haben kann. Hierdurch können die Durchströmungsverhältnisse für das Abgas in einer ungewünschten Weise verändert werden.

Außerdem ist zu berücksichtigen, dass derartige Filter bzw. Siebe besonders einfach, ggf. auch als Nachrüstsatz, in existierende Abgasleitungen für eine Abgasrückführung (EGR-System: Exhaust Gas Recirculation-System) integriert werden können.

Hiervon ausgehend ist es Aufgabe der vorliegenden Erfindung, die mit Bezug auf den Stand der Technik geschilderten Probleme zumindest teilweise zu lösen. Insbesondere soll eine Vorrichtung angegeben werden, die einfach herstellbar ist, dauerhaft den Belastungen (insbesondere im Abgasrückführsystem) gewachsen ist und eine effiziente Abscheidung von Partikeln bzw. Umsetzung von Schadstoffen des Abgases ermöglicht.

Diese Aufgaben werden gelöst mit einer Vorrichtung gemäß den Merkmalen des Patentanspruches 1. Weitere vorteilhafte Ausgestaltungen der Vorrichtung sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen.

Die erfindungsgemäße Vorrichtung zur Abscheidung von Partikeln aus einem Abgas einer Verbrennungskraftmaschine umfasst zumindest:
- einen Topf mit einem Boden, der eine Vielzahl von Öffnungen aufweist,
- wenigstens eine Vlieslage, die vorzugsweise nach Art eines Filters oder eines Siebes ausgeführt ist welche am Boden des Topfes positioniert ist, und
- einen Deckel, der außen am Boden (3) des Topfes angeordnet ist,
wobei die wenigstens eine Vlieslage zwischen dem Boden und dem Deckel positioniert ist.

Der Topf ist insbesondere nach Art eines rohrförmigen Zylinderabschnitts ausgebildet, der einen den Querschnitt (bevorzugt mit einem Durchmesser von mindestens 50 mm oder sogar mindestens 90 mm und ganz besonders bevorzugt nicht größer als 200 mm) überspannenden Boden aufweist. Bevorzugt ist, dass der Topf mit dem Boden einstückig ausgebildet ist. Der Zylinderabschnitt erstreckt sich dabei bevorzugt über eine Länge von mindestens 50 mm. An der dem Boden gegenüberliegenden Stirnseite kann der Topf zusätzlich mit einem Kragen ausgeführt sein, mit dem der Topf in bspw. eine Abgasrückführleitung zur Anlage gebracht werden kann bzw. dort mit dieser verbunden werden kann. Der Kragen dient insbesondere auch dazu, in einer Verbindungsstelle der Abgasrückführleitung hin zu einer anderen Abgas führenden Leitung/Vorrichtung integriert zu werden.

Der Boden weist eine Vielzahl von Öffnungen auf. Die Öffnungen sind bevorzugt nach Art von runden und/oder (ovalen, ggf. auch gebogenen) länglichen Öffnungen ausgeführt, wobei diese bevorzugt einen minimalen Durchmesser von mindestens 5 mm, bevorzugt sogar von mindestens 10 mm, aufweisen. Grundsätzlich können die Öffnungen nach Art von konzentrischen Kreisen zueinander angeordnet sein. Ebenso ist möglich, dass zumindest ein Teil der Öffnungen nach Art eines Vielecks, eines Schlitzes, oder dergleichen ausgeführt ist. Bevorzugt ist, dass der größte Anteil der Fläche der Bodens mit Öffnungen ausgeführt ist, so dass bspw. mehr als 50 %, insbesondere mehr als 60 %, der Fläche des Bodens mit Öffnungen ausgeführt ist. Dabei sollten noch ausreichend stabile Stege zwischen den Öffnungen verbleiben, so dass der Anteil der Öffnungen bezogen auf die Fläche des Bodens 85 % nicht überschreiten sollte, insbesondere sogar nicht 70 %.

Weiter ist bevorzugt, dass der Topf (zumindest im Bereich des Bodens) eine Materialdicke von weniger als 1 mm aufweist, bspw. auch kleiner 0,8 mm oder insbesondere kleiner 0,6 mm.

Die zumindest eine Vlieslage hat bevorzugt eine Materialdicke, die kleiner als 2 mm ist, insbesondere kleiner 1 mm. Die Vlieslage ist bevorzugt so ausgebildet, dass sie flächig am Boden anliegt. Die Vlieslage ist insbesondere nach Art eines Filters oder Siebes ausgeführt, wobei ggf. mehrere Vlieslagen zusammengefügt sind. Die Vlieslage bildet bevorzugt eine ausgerichtete Anordnung von Drahtfilamenten aus, so dass im Wesentlichen die gleiche Porengröße bzw. der gleiche Staudruck für das Abgas über den Querschnitt der Vlieslage ausgebildet ist. Die Vlieslage ist demnach bevorzugt (allein) mit miteinander verschweißten, versinterten und/oder verlöteten Drahtfilamenten aufgebaut.

Darüber hinaus ist ein Deckel vorgesehen, der ebenfalls die Vlieslage überspannt. Der Deckel hat eine Materialdicke, die im Wesentlichen der Materialdicke des Bodens entspricht, also insbesondere eine Materialdicke von weniger als 1 mm aufweist, bspw. auch kleiner 0,8 mm oder insbesondere kleiner 0,6 mm. Weiter hat der Deckel ebenfalls eine Vielzahl von Löchern, die nicht zwingend mit dem Muster der Öffnungen des Bodens übereinstimmen müssen. Auch hierzu ist bevorzugt, dass die Fläche des Deckels überwiegend durch Löcher gebildet ist, insbesondere wie es vorstehend anteilig mit Bezug auf den Boden ausgeführt wurde.

In einer ganz besonders bevorzugten Ausgestaltung der Vorrichtung sind die Öffnungen des Bodens und die Löcher des Deckels zueinander ausgerichtet angeordnet, also insbesondere hinsichtlich der Form und der Lage (deckungsgleiche Positionierung). Damit ist insbesondere der Fall gegeben, dass die Öffnungen/Löcher bzw. Stege von Boden und Deckel in Strömungsrichtung des Abgases hintereinander (im Strömungsschatten) angeordnet sind.

Dabei ist die Vlieslage zwischen dem Boden und dem Deckel so angeordnet, dass der Boden und der Deckel jeweils außen flächige Stützelemente ausbilden. Gegebenenfalls kann die zumindest eine Vlieslage zwischen Boden und Deckel (nur) geklemmt sein. Es ist aber auch möglich, dass die zumindest eine Vlieslage auch mit zumindest dem Boden (oder dem Zylinderabschnitt) oder dem Deckel (insbesondere stoffschlüssig) verbunden ist. So ist die Vlieslage auch bei hohen thermischen und dynamischen Beanspruchungen sicher an der Vorrichtung positioniert.

Bei dieser Anordnung durchströmt das zu reinigende Abgas bevorzugt zunächst den Deckel des Topfes, dann die zumindest eine Vlieslage und schließlich den Boden - gleichwohl ist auch eine entgegengesetzte Durchströmung möglich.

Gemäß einer Weiterbildung der Vorrichtung ist auch vorgesehen, dass der Deckel außen den Topf umgreift. Das heißt mit anderen Worten auch, dass der Deckel bspw. eine Art (insbesondere umlaufenden) Umgriff aufweist, der außen mit dem Zylinderabschnitt des Topfes zusammenwirkt. Dort ist insbesondere eine kraftschlüssige oder sogar stoffschlüssige Verbindung ausgeführt, bspw. durch Schweißen oder Löten. Der Umgriff kann sich beisielweise über mindestens 5 mm des Zylinderabschnitts erstrecken. Bevorzugt ist dabei, dass im Übergangsbereich Boden/Zylinderabschnitt und/oder im Übergangsbereich Deckel/Umgriff ein Radius vorgesehen ist. Ggf. kann der Zylinderabschnitt des Topfes im Bereich des Umgriffs des Deckels verjüngt (mit einem reduzierten Querschnitt bzw. mit einer Aufnahme) ausgebildet sein, so dass ein Überstand des Deckels in radialer Richtung nach außen gegenüber dem Zylinderabschnitt vermieden wird.

Einer Weiterbildung der Erfindung zur Folge kann auch vorgesehen sein, dass zumindest der Boden oder der Deckel gewölbt sind. Dabei ist die Wölbung bevorzugt so ausgerichtet, dass sie sich in Strömungsrichtung erstreckt. Grundsätzlich ist auch anzumerken, dass die Wölbung des Bodens mit der Wölbung des Deckels nicht zwangsläufig übereinstimmen muss. Die gewölbte Form des Bodens und/oder des Deckels ermöglicht eine Ausführung des Topfes bzw. des Deckels mit einer geringeren Materialdicke, wobei gleichzeitig eine unerwünschte Durchbiegung in Folge des Abgasgegendruckes, der sich im Laufe der Benutzung der Vorrichtung ausbilden kann, stattfindet. Bevorzugt ist, dass die Wölbung sich in Strömungsrichtung über eine Distanz von mindestens 2 mm, insbesondere mindestens 4 mm und ganz besonders bevorzugt maximal 10 mm erstreckt.

Mit einer solchen gewölbten Ausführung können Durchbiegungen, Spannungen und Dehnungen stark reduziert werden. Aufgrund des veränderten Tragverhaltens finden sich hierbei nur noch sehr geringe Durchbiegungen. Die Spannungen bleiben in den Bauteilen Topf (z. B. Materialstärke 1,5 mm; Material 1.4509) und Deckel (z. B. Materialstärke 0,8 mm; Material 1.4509) unterhalb der Fließgrenze (ca. 140 N/mm² bei 600 °C). Bei dem Topf hat die Variante mit Wölbung 5 mm nach innen die geringsten Werte. Durch die hohe Druckbelastung erfolgt eine zusätzliche Durchbiegung der Vlieslage (z. B. Materialstärke 0,3 mm; Material 1.4767) durch die Löcher/Öffnungen in Deckel/Boden, wobei die auftretenden Spannungen wesentlich geringer sind als die ermittelte Fließgrenze der Vlieslage selbst.

Des Weiteren ist bevorzugt, dass die zumindest eine Vlieslage katalytisch beschichtet ist. Hierbei kommt insbesondere eine Beschichtung in Betracht, die oxidativ wirkt. Die Oxidationsbeschichtung kann insbesondere zur Oxidation von Kohlenwasserstoffverbindungen und/oder Stickstoffverbindungen/Stickoxidverbindungen ausgebildet sein. Bevorzugt ist dabei, dass die gesamte Vlieslage mit der gleichen katalytischen Beschichtung ausgeführt ist.

Außerdem ist auch bevorzugt, dass die Vlieslage mit einem Gewebe gebildet ist. Hierbei kommt insbesondere ein 4-lagiges Tela-Gewebe zum Einsatz. Tela-Gewebe zeichnen sich durch eine 5-Schaft-Atlas-Bindung aus; durch diese besondere Bindungsart werden Gewebe mit offenen Maschen, d. h. hohen Durchflussraten, bei gleichzeitiger hoher mechanischer Stabilität möglich. Geeignete mehrlagige Gewebe können ggf. auch miteinander stoffschlüssig verbunden sein, bspw. durch Verschweißen. Hierbei kann auch vorgesehen sein, dass die Orientierung der Gewebe und/oder der Drahtfilamente zueinander verschieden ausgeführt sind.

Ganz besonders bevorzugt ist auch, dass keine vollflächige stoffschlüssige Verbindung zwischen der zumindest einen Vlieslage, dem Boden und dem Deckel ausgeführt ist.

Bevorzugt ist die Vorrichtung insbesondere in der Form, dass der Boden mindestens eine zentrale erste Zone und eine die erste Zone umschließende zweite Zone aufweist, und die erste Zone und die zweite Zone verschiedenartige Öffnungen aufweisen. Ganz besonders bevorzugt ist hierbei, dass sich die erste Zone ausgehend vom Zentrum des Bodens über mindestens 20%, mindestes 30% oder sogar mindestens 50% eines Durchmessers des Bodens erstreckt. Dabei ist die erste Zone bevorzugt mit der gleichen Gestalt gebildet wie der Boden selbst, also beispielsweise nach Art eines Kreises, wenn der Boden rund ist. Die erste Zone sollte sich aber in diesem Fall bevorzugt nicht deutlich größer als 50% des Durchmessers ausgeführt sein, also insbesondere 60% des Durchmessers nicht überschreiten. Die zweite Zone umfasst dann regelmäßig den restlichen Bereich des Bodens zwischen der ersten Zone und dem Rand des Bodens. Damit folgt die Form der zweiten Zone auch der Form der ersten Zone und/oder des Randes des Bodens, ist also gemäß dem obigen Beispiel nach Art eines Kreisringes ausgeführt. In der ersten Zone sind bevorzugt (überwiegend oder sogar ausschließlich) Öffnungen nach Art von, insbesondere gekrümmten, Langlöchern vorgesehen, die konzentrisch zur Grenze der ersten Zone um eine zentrale (runde) Öffnung angeordnet sind. Dabei kann die Größe und/oder Anzahl der Langlöcher von innen nach außen varüeren. Im Bereich der zweiten Zone sind dahingegen bevorzugt nur gleichartige bzw. gleich geformte Lochausnehmungen vorgesehen, die sich von der Grenze der ersten Zone hin zum Rand des Bodens erstrecken. Die Lochausnehmungen sind zudem gekrümmt, insbesondere ähnlich einer Evolvente, und weiten sich hin zum Rand bevorzugt auf, so dass die benachbarten Stege zwischen ihnen etwa eine gleiche Dicke haben. Bevorzugt ist zudem, dass die Länge der Lochausnehmungen mindestens doppelt so lang sind wie die (insbesondere größten) Langlöcher in der ersten Zone, gegebenenfalls sogar um ein Vielfaches so lang. Grundsätzlich ist möglich, dass mehrere Lochausnehmungen hintereinander gereiht vorgesehen sind, um die Distanz zwischen der Grenze der ersten Zone und dem Rand zu überspannen, bevorzugt ist aber, dass dies mit jeweils einer einzelnen Lochausnehmung erreicht wird. Weiterhin ist bevorzug, dass der Flächenanteil der Öffnungen in der ersten Zone und der Zweiten Zone möglichst gleich ist, so dass eine Abweichung von maximal 15 % eingehalten werden sollte, es sei denn, dass eine vorgegebene Strömungsbeeinflussung (erhöhter Staudruck) in einer der Zonen erreicht werden soll. Die hier vorgeschlagene Anordnung der Öffnungen führt insbesondere zu einem sehr guten Verhalten des Bodens bei thermischen Wechselbeanspruchungen, insbesondere im Hinblick auf Spannungen im Boden.

Die erfindungsgemäße Vorrichtung findet insbesondere Einsatz in einem Abgasrückführsystem eines Kraftfahrzeuges, wobei die Vorrichtung z. B. in einer Abgasrückführleitung angeordnet ist. Weiter ist bevorzugt, dass das durch die Vorrichtung geleitete Abgas bereits einer Abgasbehandlungseinheit zugeführt wurde, bspw. einem Katalysator (SCR-Katalysator, Oxidationskatalysator etc.) und/oder einem Filter. Weiter ist bevorzugt, dass die vorgelagerte Abgasbehandlungseinheit aus einem keramischen Material ist. Insofern dient die Vorrichtung auch dazu, sich ggf. ablösende Bestandteile der vorgelagerten Abgasbehandlungseinheit aufzufangen und somit den Eintritt hin zur Verbrennungskraftmaschine und/oder einem Turbolader zu vermeiden.

Bei diesem Einsatz sind insbesondere folgende Umgebungsbedingungen zu beachten: maximale Temperaturen bis ca. 800 °C; dynamische Belastung; im Abgasrückführsystem bis 600 mbar Druckverlust bei ca. 600 °C.

Die Erfindung wird nachfolgend anhand der Figuren näher erläutert. Die Figuren zeigen besonders bevorzugte Ausführungsvarianten der Erfindung, auf die diese jedoch nicht begrenzt ist. Es zeigen schematisch:
- Fig. 1:: eine Ausführungsvariante der erfindungsgemäßen Vorrichtung in perspektivischer Darstellung,
- Fig. 2:: eine Ausführungsvariante der erfindungsgemäßen Vorrichtung im Querschnitt,
- Fig. 3:: ein Detail einer Ausführungsvariante der erfindungsgemäßen Vorrichtung im Querschnitt,
- Fig. 4:: die Integration einer erfindungsgemäßen Vorrichtung in ein Abgassystem einer mobilen Verbrennungskraftmaschine, und
- Fig. 5:: eine Draufsicht auf einen Boden einer weiteren Ausführungsvariante der erfindungsgemäßen Vorrichtung.

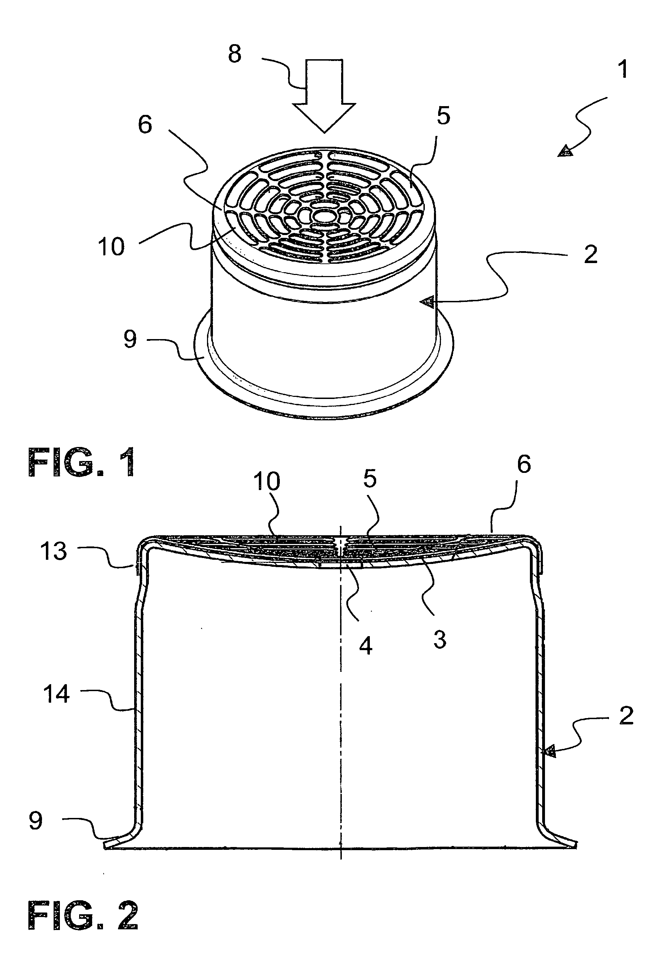

Fig. 1 zeigt ein erstes Ausführungsbeispiel einer Vorrichtung 1 zum Abfangen bzw. Auffangen von Partikeln, welche durch eine Abgasrückführleitung geführt werden. Dabei strömt das Abgas gemäß der veranschaulichten Strömungsrichtung 8 zunächst auf einen Deckel 6 mit einer Vielzahl von Löchern 10 zu und durchtritt die Löcher 10. Somit gelangen das Abgas und die darin enthaltenen Partikel zu einer Vlieslage 5. Infolge des Kontaktes mit der Vlieslage 5 werden die Partikel aufgehalten und ggf. auch gasförmige/flüssige Komponenten des Abgases umgesetzt.

Der Deckel 6 ist an einem stirnseitigen Ende eines Topfes 2 angeordnet, insbesondere nach Art einer den Topf 2 überspannenden Kappe. Dazu weist der Topf 2 im Kontaktbereich hin zum Deckel eine Aufnahme auf. Gegebenenfalls kann der (hier nicht dargestellte) Boden ebenfalls als separates Bauteil innen an der Aufnahme beseitigt sein. An dem gegenüber liegenden Ende ist ein umlaufender Kragen 9 nach Art einer Umbördelung ausgeführt.

Fig. 2 zeigt im Querschnitt eine Ausführungsvariante der Vorrichtung 1 mit einem Topf 2. Der Topf 2 weist nahe eine ersten (unten dargestellten) Stirnseite wiederum einen umlaufenden Kragen 9 auf, an dem sich ein Zylinderabschnitt 14 anschließt. Daran anschließend ist (einstückig) ein Boden 3 mit einer Vielzahl von Öffnungen 4 ausgebildet. Das Innere des Zylinderabschnitts 14 ist bevorzugt frei von Einbauten und dient zur Anlage/Ausrichtung des Topfes 2 in einer Abgasleitung. Den Abschluss bildet dann ein Deckel 6, der eine Vielzahl Löcher 10 aufweist. Der Deckel 6 ist mit einem (ebenfalls umlaufenden) Umgriff 13 ausgebildet, der außen an dem Zylinderabschnitt 14 verschweißt ist. Damit dieser Umgriff 13 radial nach außen nicht übersteht, ist eine Verjüngung des Zylinderabschnitts 14 im Anlagebereich vorgesehen. Zwischen dem Boden 3 und dem Deckel 6 ist nunmehr die mindestens eine Vlieslage (hier nicht dargestellt) positioniert und sicher gehalten.

Grundsätzlich sei aber darauf hingewiesen, dass der Zylinderabschnitt auch mit einer (radial einwärts) ausgebildeten Auflagekante ausgebildet sein kann, so dass dann ein separater Boden und die zumindest eine Vlieslage gemeinsam mittels des Deckels an dem Zylinderabschnitt befestigt / eingeklemmt wird. Ebenso können andere Möglichkeiten zur Verbindung dieser Bestandteile der Vorrichtung in Betracht kommen.

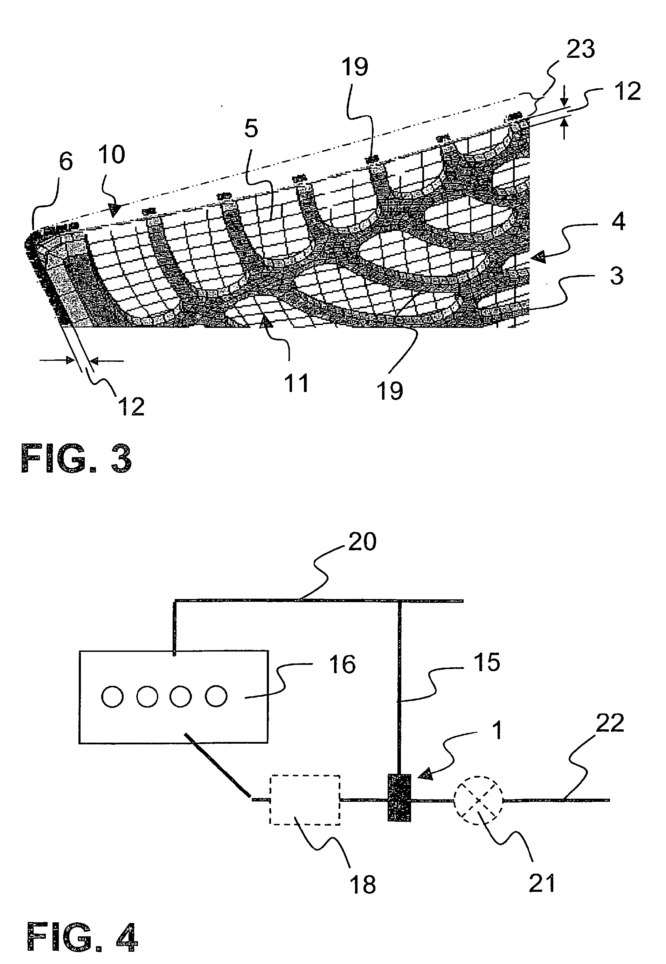

Fig. 3 veranschaulicht nun ein Detail eines Querschnitts durch den Abschnitt mit dem Deckel 6, der Vlieslage 5 und dem Boden 3. Die Betrachtung erfolgt dabei vom Inneren des Zylinderabschnitts heraus Richtung Boden 3. Die Vlieslage 5 ist hier mit einer katalytisch aktiven Beschichtung 11 versehen. Die Vlieslage 5 ist mit vier Lagen eines Gewebes 7 aus (unterschiedlich dicken) metallischen Drahtfilamenten gebildet. Die Vlieslage liegt dabei im Wesentlichen an dem Boden 3 des Topfes 2 und überspannt im Wesentlichen (nur) den Boden 3. Aus diesem Detail geht auch hervor, dass die Löcher 10 des Deckels 6 und die Öffnungen 4 des Bodens 3 deckungsgleich angeordnet sind, so dass die verbleibenden Stege 19 (z. B. mit einer Stegbreite von maximal 1,5 mm) jeweils im Strömungsschatten angeordnet sind.

Bei dieser Ausgestaltung haben sowohl der Boden 3 als auch der Deckel 6 eine Materialdicke 12, die weniger als 1 mm beträgt. Damit gleichermaßen eine sehr stabile Anordnung verwirklicht ist, weisen beide (und damit auch die dazwischen angeordnete Vlieslage 5) eine Wölbung auf. Die Wölbung ist bevorzugt zentrisch zur Strömungsrichtung ausgebildet, insbesondere mit einer Distanz 23 von zwei (2) bis fünf (5) mm.

Fig. 4 zeigt eine Verbrennungskraftmaschine 16 mit einem Abgassystem 17. Das Abgassystem 17 weist nachfolgend der Verbrennungskraftmaschine 16 eine Abgasbehandlungseinheit 18 auf, von der aus stromabwärts die Abgasrückführleitung 15 abzweigt. Im Bereich dieser Abzweigung ist nun die Vorrichtung 1 integriert. Damit durchströmt das gesamte, über die Ansaugleitung 20 zur Verbrennungskraftmaschine 16 zurückgeführte Abgas die Vorrichtung 1. Grundsätzlich kann dabei die Abgasrückführleitung 15 bzw. die Vorrichtung 1 stromaufwärts oder stromabwärts eines Turboladers 21 in der Abgasleitung 22 positioniert sein.

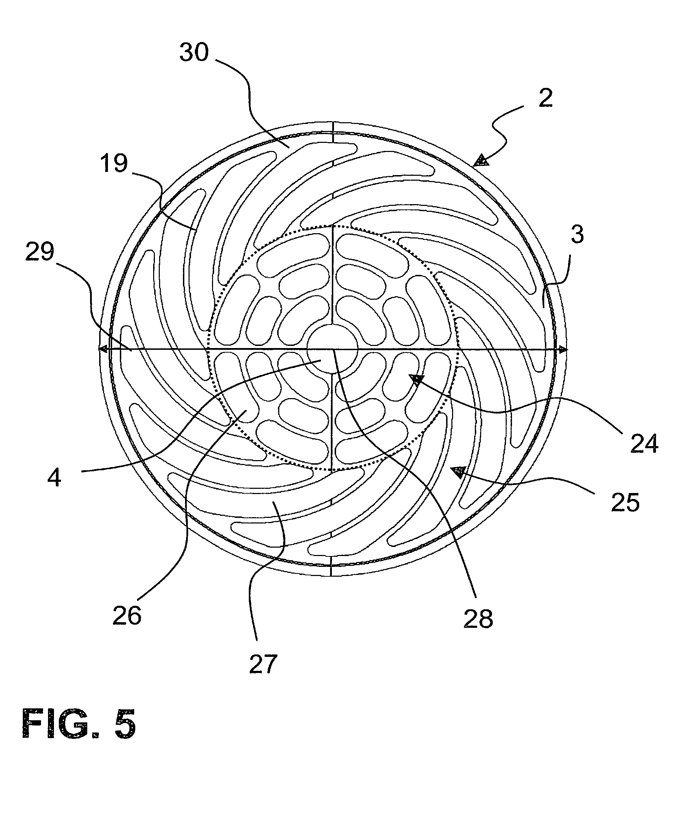

Fig. 5 zeigt eine Draufsicht auf einen Boden 3 des Topfes 2 einer weiteren Ausführungsvariante der erfindungsgemäßen Vorrichtung. Der Boden 3 weist in diesem Fall eine zentrale erste Zone 24 und eine die erste Zone 24 umschließende zweite Zone 25 auf. Die erste Zone 24 erstreckt sich ausgehend vom Zentrum 28 des Bodens 3 über ca. 50% eines Durchmessers 29 des Bodens. Dabei ist die erste Zone 24 mit der gleichen Gestalt gebildet wie der runde Boden 3 selbst, nämlich nach Art eines Kreises Die zweite Zone 25 umfasst den restlichen Bereich des Bodens 3 zwischen der ersten Zone 24 und dem Rand 30 des Bodens 3. Damit folgt die Form der zweiten Zone 25 auch der Form der ersten Zone 24 und des Randes 30 des Bodens 3. Die erste Zone 24 und die zweite Zone 25 weisen verschiedenartige Öffnungen auf. In der ersten Zone sind Öffnungen nach Art von gekrümmten Langlöchern 26 vorgesehen, die konzentrisch zur Grenze der ersten Zone 24 um eine zentrale (runde) Öffnung 4 angeordnet sind. Im Bereich der zweiten Zone 25 sind dahingegen im Wesentlichen gleichartige bzw. gleich geformte Lochausnehmungen 27 vorgesehen, die sich jeweils von der Grenze der ersten Zone 24 bis hin zum Rand 30 des Bodens 3 erstrecken. Die Lochausnehmungen 27 sind zudem gekrümmt, insbesondere ähnlich einer Evolvente, und weiten sich hin zum Rand 3 auf, so dass die Stege 19 im Wesentlichen die gleiche Dicke aufweisen. Die hier vorgeschlagene Anordnung der Öffnungen führt insbesondere zu einem sehr guten Verhalten des Bodens bei thermischen Wechselbeanspruchungen, insbesondere im Hinblick auf Spannungen im Boden.

### Bezugszeichenliste

- 1: Vorrichtung
- 2: Topf
- 3: Boden
- 4: Öffnung
- 5: Vlieslage
- 6: Deckel
- 7: Gewebe
- 8: Strömungsrichtung
- 9: Kragen
- 10: Loch
- 11: Beschichtung
- 12: Materialdicke
- 13: Umgriff
- 14: Zylinderabschnitt
- 15: Abgasrückführleitung
- 16: Verbrennungskraftmaschine
- 17: Abgassystem
- 18: Abgasbehandlungseinheit
- 19: Steg
- 20: Ansaugleitung
- 21: Turbolader
- 22: Abgasleitung
- 23: Distanz
- 24: erste Zone
- 25: zweite Zone
- 26: Langloch
- 27: Lochausnehmung
- 28: Zentrum
- 29: Durchmesser
- 30: Rand

## Patentansprüche

1. Vorrichtung (1) zur Abscheidung von Partikeln aus einem Abgas einer Verbrennungskraftmaschine (16) umfassend zumindest:
- einen Topf (2) mit einem Boden (3), der eine Vielzahl von Öffnungen (4) aufweist,
- wenigstens eine Vlieslage (5), die vorzugsweise nach Art eines Filters oder eines Siebes ausgeführt ist und welche am Boden (3) des Topfes (2) positioniert ist, und
- einen Deckel (6), der außen am Boden (3) des Topfes (2) angeordnet ist,
wobei die wenigstens eine Vlieslage (5) zwischen dem Boden (3) und dem Deckel (6) positioniert ist.

2. Vorrichtung (1) nach Patentanspruch 1, wobei der Deckel (6) außen den Topf (2) umgreift.

3. Vorrichtung (1) nach einem der vorhergehenden Patentansprüche, wobei zumindest der Boden (3) oder der Deckel (6) gewölbt ist.

4. Vorrichtung (1) nach einem der vorhergehenden Patentansprüche, wobei die zumindest eine Vlieslage (5) katalytisch beschichtet ist.

5. Vorrichtung (1) nach einem der vorhergehenden Patentansprüche, wobei die zumindest eine Vlieslage (5) nach Art eines Gewebes (7) ausgebildet ist.

6. Vorrichtung (1) nach einem der vorhergehenden Patentansprüche, wobei der Boden (3) mindestens eine zentrale erste Zone (24) und eine die erste Zone (24) umschließende zweite Zone (25) aufweist, und die erste Zone (24) und die zweite Zone (25) verschiedenartige Öffnungen aufweisen.

7. Kraftfahrzeug, aufweisend ein Abgasrückführsystem, das mit einer Vorrichtung (1) nach einem der vorhergehenden Patentansprüche ausgeführt ist.

## Claims

1. Device (1) for the separation of particles out of an exhaust gas of an internal combustion engine (16), comprising at least:
- a pot (2) with a base (3) which has a multiplicity of openings (4),
- at least one nonwoven layer (5) which is formed in particular in the manner of a filter or screen and which is positioned on the base (3) of the pot (2), and
- a cover (6), which is arranged on the outside at the base (3) of the pot (2),
wherein the at least one nonwoven layer (5) is positioned between the base (3) and the cover (6).

2. Device as claimed in claim 1, wherein the cover (6) is wrapped around the pot (2) at the outside.

3. Device (1) as claimed in one of the preceding claims, wherein at least the base (3) or the cover (6) is of curved form.

4. Device (1) as claimed in one of the preceding claims, wherein the at least one nonwoven layer (5) is catalytically coated.

5. Device (1) as claimed in one of the preceding claims, wherein the at least one nonwoven layer (5) is in the form of a fabric (7).

6. Device (1) as claimed in one of the preceding claims, wherein the base (3) has at least one central first zone (24) and a second zone (25) which surrounds the first zone (24), and the first zone (24) and the second zone (25) have differently configured openings.

7. Motor vehicle having an exhaust-gas recirculation system which is equipped with a device (1) as claimed in one of the preceding claims.

## Revendications

1. Dispositif (1) de séparation des particules présentes dans les gaz d'échappement d'un moteur à combustion interne (16), le dispositif comportant au moins :
- une cuvette (2) dotée d'un fond (3) présentant plusieurs ouvertures (4),
- au moins une couche de feutre (5) réalisée de préférence sous la forme d'un filtre ou d'un tamis et placée sur le fond (3) de la cuvette (2) et
- un couvercle (6) disposé à l'extérieur du fond (3) de la cuvette (2), la ou les couches de feutre (5) étant placées entre le fond (3) et le couvercle (6).

2. Dispositif (1) selon la revendication 1, dans lequel le couvercle (6) chevauche la cuvette (2) par l'extérieur.

3. Dispositif (1) selon l'une des revendications précédentes, dans lequel le fond (3) ou le couvercle (6) sont bombés.

4. Dispositif (1) selon l'une des revendications précédentes, dans lequel la ou les couches de feutre (5) présentent un revêtement catalytique.

5. Dispositif (1) selon l'une des revendications précédentes, dans lequel la ou les couches de feutre (5) sont configurées comme tissu (7).

6. Dispositif (1) selon l'une des revendications précédentes, dans lequel le fond (3) présente au moins une première zone centrale (24) et une deuxième zone (25) qui entoure la première zone (24), la première zone (24) et la deuxième zone (25) présentant des ouvertures différentes.

7. Véhicule automobile présentant un système de recyclage des gaz d'échappement configuré avec un dispositif (1) selon l'une des revendications précédentes.
